(19) Europäisches Patentamt

European Patent Office

Office européen des brevets

(11) **EP 1 526 751 A1**

(12) **DEMANDE DE BREVET EUROPEEN**

(43) Date de publication:
**27.04.2005 Bulletin 2005/17**

(51) Int Cl.⁷: **H04Q 7/38**

(21) Numéro de dépôt: **04292477.9**

(22) Date de dépôt: **18.10.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **24.10.2003 FR 0312440**

(71) Demandeur: **EVOLIUM S.A.S.**
**75008 Paris (FR)**

(72) Inventeur: **Agin, Pascal**
**92320 Chatillon (FR)**

(74) Mandataire: **El Manouni, Josiane**
**COMPAGNIE FINANCIERE ALCATEL**
**Département Propriété Industrielle**
**54, rue La Boétie**
**75008 Paris (FR)**

(54) **Procédé de gestion de ressources de traitement dans un système de radiocommunications mobiles**

(57) Un des objets de la présente invention est un procédé de gestion de ressources de traitement dans un système de radiocommunications mobiles, dans lequel une entité dite première entité gère des ressources radio et des ressources de traitement correspondantes, ces dernières étant prévues dans une entité distincte dite deuxième entité, procédé dans lequel:

- la deuxième entité signale à la première entité un modèle de ressources représentatif de ses capacités de traitement, basé sur le facteur d'étalement et le débit,
- la première entité gère lesdites ressources de traitement, sur la base du modèle de ressources signalé, en fonction du facteur d'étalement et du débit pour les ressources radio allouées.

FIG_4

EP 1 526 751 A1

**Description**

La présente invention concerne d'une manière générale les systèmes de radiocommunications mobiles, et plus particulièrement les systèmes utilisant la technique CDMA (pour "Code Division Multiple Access" en anglais).

La technique CDMA est notamment utilisée dans les systèmes dits de troisième génération, tels que notamment le système UMTS (pour "Universal Mobile Telecommunication System" en anglais).

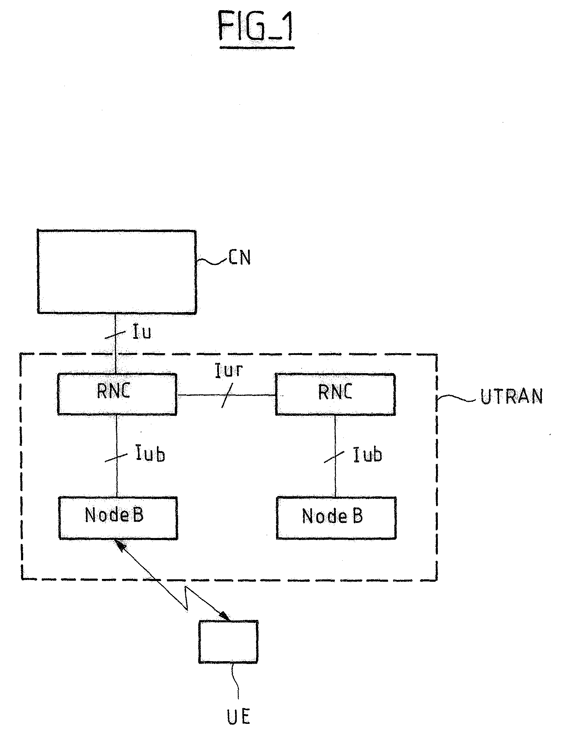

D'une manière générale, un réseau de radiocommunications mobiles comporte, comme rappelé sur la figure 1, un ensemble de stations de base et de contrôleurs de stations de base. Dans l'UMTS, ce réseau est aussi appelé UTRAN, pour "UMTS Terrestrial Radio Access Network", les stations de base sont aussi appelées Node B, et les contrôleurs de stations de base sont aussi appelés RNC (pour "Radio Network Controller" en anglais).

L'UTRAN est en relation d'une part avec des stations mobiles (appelées aussi équipements utilisateur, ou "User Equipment" ou UE), par une interface appelée interface « Uu », et d'autre part avec un coeur de réseau, ou CN (pour « Core Network » en anglais), par une interface appelée interface « lu ».

Comme rappelé sur la figure 1, les RNC sont reliés :

- aux Node B par une interface appelée interface « lub »,
- entre eux par une interface appelée interface « lur »,
- au coeur de réseau CN par une interface appelée interface « lu ».

Pour un Node B donné, le RNC qui le contrôle est aussi appelé CRNC (pour « Controlling Radio Network Controller » en anglais), et est donc relié à ce Node B via l'interface « lub ». Le CRNC a un rôle de contrôle de charge et de contrôle et d'allocation de ressources radio pour les Node B qu'il contrôle.

Pour une communication donnée relative à un équipement utilisateur UE donné, il existe un RNC, appelé SRNC (pour « Serving Radio Network Controller » en anglais) qui est connecté au coeur de réseau CN via l'interface « lu ». Le SRNC a un rôle de contrôle pour la communication considérée, incluant des fonctions d'ajout ou de retrait de liens radio (selon la technique de transmission en macro-diversité), de contrôle de paramètres susceptibles de changer en cours de communication, tels que débit, puissance, facteur d'étalement, ...etc.

Dans les systèmes CDMA les limitations de capacité sur l'interface radio sont fondamentalement différentes de ce qu'elles sont dans les systèmes utilisant d'autres techniques d'accès multiple, telles que notamment la technique TDMA (pour "Time Division Multiple Access" en anglais). La technique TDMA est notamment utilisée dans les systèmes dits de deuxième génération tels que le système GSM (pour "Global System for Mobile communications" en anglais). Dans les systèmes CDMA, tous les utilisateurs partagent la même ressource de fréquence à tout instant. La capacité de ces systèmes est donc limitée par les interférences, ces systèmes étant aussi appelés pour cette raison "soft limited systems" (en anglais).

C'est pourquoi, dans les systèmes CDMA, on prévoit des algorithmes tels que des algorithmes dits de contrôle de charge (ou "load control " en anglais), pour prévenir les surcharges, les détecter et le cas échéant les corriger, afin d'éviter une dégradation de qualité, et des algorithmes dits de contrôle d'admission d'appel (ou "call admission control" en anglais), pour décider si la capacité d'une cellule non utilisée à un instant donné est suffisante pour accepter un nouvel appel dans cette cellule (en fonction de divers paramètres tels que le service requis pour cet appel, ...etc). Dans ce qui suit ces divers algorithmes seront aussi regroupés sous le terme général de contrôle de charge.

Ces algorithmes utilisent habituellement seulement des critères radio, et sont habituellement mis en oeuvre dans le CRNC, qui ne dispose pas d'informations sur la capacité de traitement des Node B qu'il contrôle. Dans ces conditions, il peut par exemple se produire qu'un nouvel appel soit accepté par le CRNC, puis finalement rejeté par manque de ressources de traitement dans le Node B, ce qui entraîne inutilement des traitements supplémentaires dans le CRNC et des échanges de signalisation supplémentaires entre CRNC et Node B.

Bien sûr il serait possible d'éviter ces inconvénients en prévoyant dans les Node B des ressources de traitement suffisantes pour couvrir tous les cas, y compris les cas de capacité maximale (correspondant au cas de très faible niveau d'interférence). Mais ceci conduirait à avoir des stations de base coûteuses, et surdimensionnées la plupart du temps. En outre, dans le cas d'introduction progressive des services offerts par ces systèmes, la capacité de traitement des stations de base peut être limitée au début de la mise en service de ces systèmes, puis progressivement augmentée ensuite.

Il serait donc souhaitable de tenir compte de la capacité de traitement des stations de base (ou Node B) pour le contrôle de la charge dans un tel système.

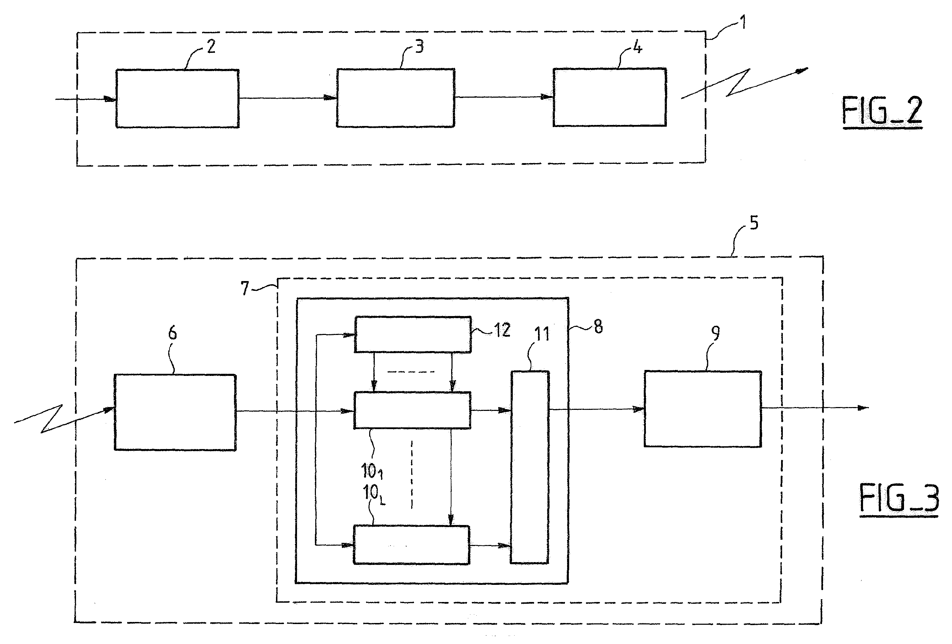

Les figures 2 et 3 rappellent les principaux traitements utilisés, respectivement en émission et en réception, dans une station de base telle que notamment un Node B pour le système UMTS.

Sur la figure 2 est illustré un émetteur 1 comportant:

- des moyens de codage-canal 2,

- des moyens d'étalement 3,
- des moyens d'émission radio-fréquence 4.

Ces différents traitements sont bien connus de l'homme du métier, et ne nécessitent pas d'être re-décrits ici de manière détaillée.

De manière connue, le codage-canal utilise des techniques telles que le codage correcteur d'erreurs et l'entrelacement, permettant d'obtenir une protection contre les erreurs de transmission.

Le codage (tel que le codage correcteur d'erreurs) est destiné à introduire une redondance dans les informations transmises. Le taux de codage est défini comme le rapport du nombre de bits d'information à transmettre sur le nombre de bits transmis ou bits codés. Différents niveaux de qualité de service peuvent être obtenus en utilisant différents types de codes correcteurs d'erreurs. Par exemple, dans l'UMTS, pour un premier type de trafic (tel que des données à haut débit) on utilise un premier type de code correcteur d'erreurs constitué par un turbo-code, et pour un deuxième type de trafic (tel que des données à plus faible débit ou de la voix) on utilise un deuxième type de code correcteur d'erreurs, constitué par un code convolutionnel.

Le codage-canal inclut aussi généralement une adaptation de débit destinée à adapter le débit à transmettre au débit offert pour sa transmission. L'adaptation de débit peut inclure des techniques telles que répétition et/ou poinçonnage, le taux d'adaptation de débit étant alors défini comme le taux de répétition et/ou de poinçonnage.

Le débit brut est défini comme le débit effectivement transmis sur l'interface radio. Le débit net est le débit obtenu après déduction, du débit brut, de tout ce qui n'est pas utile pour l'utilisateur, comme notamment la redondance introduite par le codage.

L'étalement utilise les principes connus de l'étalement de spectre. La longueur du code d'étalement utilisé est aussi appelée facteur d'étalement.

On rappelle que dans un système tel que notamment l'UMTS le débit net (appelé aussi par la suite plus simplement « débit ») peut varier au cours d'une même communication, et que le facteur d'étalement peut en outre varier en fonction du débit à transmettre.

Sur la figure 3 est illustré un récepteur 5 comportant:

- des moyens de réception radio-fréquence 6,
- des moyens 7 d'estimation des données reçues, comportant eux-mêmes notamment des moyens de désétalement 8 et des moyens de décodage-canal 9.

Ces différents traitements sont également bien connus de l'homme du métier, et ne nécessitent donc pas non plus d'être re-décrits ici de manière détaillée.

La figure 3 illustre un exemple de traitement pouvant être mis en oeuvre dans les moyens de désétalement 8. Ce traitement correspond en l'occurrence à celui mis en oeuvre dans un récepteur de type Rake, permettant d'améliorer la qualité de l'estimation des données reçues, en exploitant les phénomènes de multi-trajets, c'est-à-dire de propagation d'un même signal source selon des trajets multiples, obtenus notamment par réflexions multiples sur des éléments de l'environnement. Dans les systèmes CDMA, contrairement notamment aux systèmes TDMA, ces trajets multiples peuvent en effet être exploités pour améliorer la qualité de l'estimation des données reçues.

Un récepteur Rake comporte un ensemble de L doigts (ou "fingers" en anglais) notés $10_1$, à $10_L$, et des moyens 11 de combinaison des signaux issus de ces différents doigts. Chaque doigt permet de désétaler le signal reçu selon l'un des différents trajets pris en compte, les différents trajets pris en compte étant déterminés par des moyens 12 pour estimer la réponse impulsionnelle du canal de transmission. Les moyens 11 permettent de combiner les signaux désétalés correspondant aux différents trajets considérés, selon un traitement destiné à optimiser la qualité de l'estimation des données reçues.

La technique de réception au moyen d'un récepteur Rake est également utilisée en liaison avec la technique de transmission en macro-diversité, selon laquelle un même signal source est transmis simultanément à une même station mobile par plusieurs stations de base ou plusieurs secteurs d'une même station de base. La technique de transmission en macro-diversité permet non seulement d'améliorer les performances en réception, au moyen d'un récepteur Rake, mais aussi de minimiser les risques de perte d'appel lors de transferts inter-cellulaires, ou "handovers" en anglais. Pour cette raison elle est aussi appelée "soft handover" (en anglais), par opposition à la technique de "hard handover" selon laquelle une station mobile n'est connectée à chaque instant qu'à une seule station de base (ou à un seul secteur d'une même station de base).

Les moyens d'estimation des données reçues peuvent en outre utiliser diverses techniques destinées à réduire les interférences telles que par exemple la technique dite de détection multi-utilisateur (ou "multi-user detection" en anglais).

Il est aussi possible d'utiliser une pluralité d'antennes de réception. Les moyens d'estimation des données reçues comportent alors en outre des moyens de combinaison des signaux obtenus pour ces différentes antennes de réception, également de manière à optimiser la qualité de l'estimation des données reçues.

Le décodage-canal inclut des fonctions telles qu'un désentrelacement et un décodage correcteur d'erreurs. Le décodage correcteur d'erreurs est généralement nettement plus complexe que le codage correcteur d'erreurs et peut utiliser des techniques telles que par exemple le décodage par maximum de vraisemblance. Par exemple, pour les codes convolutionnels, on peut utiliser un algorithme dit de Viterbi.

Pour pouvoir traiter simultanément plusieurs utilisateurs, une station de base ou Node B comporte un ensemble d'émetteurs et de récepteurs tels que l'émetteur et le récepteur ainsi rappelés. Une grande capacité de traitement est ainsi requise dans une station de base ou Node B, notamment, en réception, pour l'estimation des données reçues.

Comme indiqué précédemment, il est donc souhaitable de tenir compte de la capacité de traitement d'une station de base, pour le contrôle de la charge dans un système tel que le système UMTS par exemple.

Ainsi, pour le système UMTS, il est spécifié dans le document 3G TS 25.433 publié par le 3GPP ("3rd Generation Partnership Project") que le Node B signale au CRNC sa capacité de traitement globale, ou crédit de capacité (ou "capacity credit" en anglais), et la quantité de cette capacité de traitement globale, ou coût d'allocation, qui est nécessaire pour l'allocation d'un canal physique, pour chaque valeur du facteur d'étalement (ou « spreading factor » en anglais, ou SF) possible dans ce système. L'ensemble des coûts d'allocation pour les différentes valeurs possibles du facteur d'étalement est aussi appelé loi de consommation de capacité (ou « capacity consumption law» en anglais). L'ensemble formé par le crédit de capacité et la loi de consommation est aussi appelé modèle de ressources. De telles informations sont signalées par un Node B au CRNC à chaque fois que la capacité de traitement de ce Node B est changée, en utilisant un message appelé « Resource Status Indication », ou en réponse à une requête du CRNC en utilisant un message appelé « Audit Response ».

Dans une première demande de brevet antérieure (demande de brevet français publiée sous le n° 2 813 006 déposée le 10 Août 2000 par le demandeur), il a été observé qu'une telle solution n'est pas bien adaptée pour tenir compte des limitations dans la capacité de traitement d'un Node B, notamment pour les raisons suivantes:

- Les traitements effectués dans le décodage-canal dépendent du débit net plutôt que du débit brut, ou encore du facteur d'étalement. Par exemple, en considérant un facteur d'étalement de 128 (et donc un débit brut de 30 kbps, le débit net peut avoir différentes valeurs suivant le taux de codage et le taux d'adaptation de débit, typiquement le débit net peut varier de 5 à 15 kbps. Par conséquent, pour un facteur d'étalement fixe, la quantité de traitement dans le Node B peut varier de manière significative (par exemple dans un rapport supérieur à 3). Or ceci n'est pas pris en compte dans cette solution antérieure.
- Le nombre de doigts de récepteur Rake requis pour l'estimation du canal de transmission et des données est fortement dépendant du nombre de liens radio. Or dans la solution antérieure le nombre maximum de doigts de récepteur Rake dans le Node B ne peut pas être pris en compte dans des algorithmes tels que des algorithmes de contrôle de charge ou d'admission d'appels car ce type de limitation n'est pas lié au facteur d'étalement.
- La capacité de traitement signalée par le Node B au CRNC est une capacité de traitement globale qui ne peut pas tenir compte des différentes limitations possibles dans la capacité de traitement de ce Node B.

Dans cette première demande de brevet antérieure, il a été proposé une autre approche, selon laquelle, pour tenir compte des différentes limitations possibles dans la capacité de traitement d'un Node B, le Node B signale au CRNC un ou plusieurs paramètres représentatifs de la charge de trafic, tels que notamment le nombre maximum de liens radio pouvant être établis, et le débit net maximum pour les liens radio établis, éventuellement pour chaque sens de transmission et/ou pour chaque type de codage-canal susceptible d'être utilisé. Pour plus d'informations, on pourra se référer à cette première demande de brevet antérieure.

Dans une deuxième demande de brevet antérieure (demande de brevet français publiée sous le n° 2 819 658 déposée le 12 Janvier 2001 par le demandeur), il a encore été proposé une autre approche, selon laquelle on conserve la notion de capacité de traitement globale (ou « capacity crédit »), mais le coût d'allocation n'est plus signalé pour chaque valeur possible du facteur d'étalement mais pour différentes valeurs possibles de débit. Notamment le coût d'allocation peut être signalé pour des débits typiques dits de référence, et le coût d'allocation peut ensuite être déterminé pour toute valeur de débit, à partir des coûts signalés pour les débits de référence, en utilisant des techniques d'interpolation. Pour plus d'informations, on pourra se référer à cette deuxième demande de brevet antérieure.

Dans une troisième demande de brevet antérieure (demande de brevet français publiée sous le n° 2 826 808 déposée le 29 Juin 2001 par le demandeur) une solution a en outre été proposée pour résoudre les problèmes suivants. Tous les équipements actuels utilisant un modèle de ressources basé sur le facteur d'étalement (suivant l'état actuel de la norme) ne pourront pas nécessairement être modifiés pour pouvoir utiliser un modèle de ressources basé sur le débit (suivant l'approche considérée dans la deuxième demande de brevet antérieure rappelée ci-dessus). En outre, pour les équipements futurs, la possibilité d'utiliser un modèle de ressources basé sur le facteur d'étalement, en plus d'un modèle de ressource basé sur le débit, pourra éventuellement être maintenue. Un problème de compatibilité pourra alors se poser entre différents types d'équipements, suivant le type de modèle de ressources qu'ils utilisent.

Dans cette troisième demande de brevet antérieure, il a notamment été proposé un protocole de signalisation additionnel, selon lequel un Node B supportant les deux types de modèles de resources signale, en plus du modèle lui-même, le type de modèle utilisé. Pour plus d'informations on pourra se référer à cette troisième demande de brevet antérieure.

La présente invention est basée sur une approche différente, permettant de résoudre tout ou partie des problèmes présentés ci-dessus.

Un des objets de la présente invention est un procédé de gestion de ressources de traitement dans un système de radiocommunications mobiles, dans lequel une entité dite première entité gère des ressources radio et des ressources de traitement correspondantes, ces dernières étant prévues dans une entité distincte dite deuxième entité, procédé dans lequel:

- la deuxième entité signale à la première entité un modèle de ressources représentatif de ses capacités de traitement, basé sur le facteur d'étalement et le débit,
- la première entité gère lesdites ressources de traitement, sur la base du modèle de ressources signalé, en fonction du facteur d'étalement et du débit pour les ressources radio allouées.

Suivant une autre caractéristique :

- les informations signalées par la deuxième entité, représentatives dudit modèle de ressources, comportent une capacité de traitement globale, ou crédit de capacité, et une loi de consommation, indiquant la quantité de cette capacité de traitement globale nécessaire pour l'allocation de ressources radio, en fonction du facteur d'étalement et du débit,
- ladite gestion de ressources de traitement par ladite deuxième entité comporte une mise à jour du crédit de capacité à chaque allocation de ressources radio, sur la base de ladite loi de consommation, en fonction du facteur d'étalement et du débit pour les ressources radio allouées.

Suivant une autre caractéristique, les informations signalées par la deuxième entité, représentatives dudit modèle de ressources basé sur le facteur d'étalement et le débit, comportent des informations dites premières informations, représentatives d'un modèle de ressources basé sur le facteur d'étalement et représentatif d'une partie desdites capacités de traitement, et des informations dites deuxièmes informations, représentatives d'un modèle de ressources basé sur le débit et représentatif d'une autre partie desdites capacités de traitement.

Suivant une autre caractéristique, lesdites premières informations comportent au moins un coût d'allocation dit premier coût d'allocation, correspondant à la quantité de capacité de traitement globale nécessaire pour l'allocation de ressources radio, pour une valeur de facteur d'étalement, et lesdites deuxièmes informations comportent au moins un coût d'allocation dit deuxième coût d'allocation, correspondant à la quantité de capacité de traitement globale nécessaire pour l'allocation de ressources radio, pour une valeur de débit.

Suivant une autre caractéristique, il est prévu différents coûts d'allocation pour différentes valeurs de débit prédéterminées appelées débits de référence.

Suivant une autre caractéristique, le coût d'allocation pour un débit donné est obtenu à partir du coût d'allocation pour des débits de référence.

Suivant une autre caractéristique, le coût d'allocation pour un débit donné est obtenu par interpolation à partir du coût d'allocation pour des débits de référence.

Suivant une autre caractéristique, lorsque le débit $R$ n'est pas un débit de référence, le coût d'allocation *"Consumption_cost"* est calculé en fonction des coûts d'allocation $C_{inf}$ et $C_{sup}$ correspondant aux débits de reference $R_{inf}$ et $R_{sup}$ (avec $R_{inf} < R_{sup}$) qui sont les plus proches du débit $R$, selon la relation suivante:

$$Consumption\_cost = C_{inf} + \frac{R - R_{inf}}{R_{sup} - R_{inf}} (C_{sup} - C_{inf})$$

Suivant une autre caractéristique, si le résultat de l'interpolation est négatif, le coût d'allocation est fixé égal à zéro.

Suivant une autre caractéristique, ledit débit correspond à un débit maximum.

Suivant une autre caractéristique, ledit débit maximum est obtenu suivant l'expression :

$$Maximum\_bit\_rate = \underset{j}{\operatorname{Max}} \, br_j$$

avec :

$$br_j = \sum_{k=1}^{n} \frac{N_k^{(j)} L_k^{(j)}}{TTI_k}$$

où $br_j$ est le débit du $j$ième TFC, ou $j$ième combinaison de formats de transport, dans un TFCS, ou ensemble de combinaisons de formats de transport, $n$ est le nombre de canaux de transport multiplexés dans un même canal de transport composite codé, $N_k^{(j)}$ et $L_k^{(j)}$ sont respectivement le nombre de blocs de transport et la taille des blocs de transport (en nombre de bits) pour le $k$ième canal de transport dans le $j$ième TFC et $TTI_k$ est l'intervalle de temps de transmission ou TTI (en secondes) du $k$ième canal de transport.

Suivant une autre caractéristique, ledit débit correspond à un débit effectif.

Un autre objet de la présente invention est un système de radiocommunications mobiles, pour la mise en oeuvre d'un tel procédé.

Notamment, suivant une autre caractéristique, un tel système comporte :

- dans la deuxième entité, des moyens pour signaler à la première entité un modèle de ressources basé sur le facteur d'étalement et le débit,
- dans la première entité, des moyens pour gérer lesdites ressources de traitement, sur la base du modèle de ressources signalé, en fonction du facteur d'étalement et du débit pour les ressources radio allouées.

Un autre objet de la présente invention est une station de base pour système de radiocommunications mobiles, pour la mise en oeuvre d'un tel procédé.

Notamment, suivant une autre caractéristique, cette station de base comporte :

- des moyens pour signaler à un contrôleur de stations de base un modèle de ressources basé sur le facteur d'étalement et le débit.

Un autre objet de la présente invention est un contrôleur de stations de base pour système de radiocommunications mobiles, pour la mise en oeuvre d'un tel procédé.

Notamment, suivant une autre caractéristique, ce contrôleur de stations de base comporte:

- des moyens pour recevoir d'une station de base un modèle de ressources basé sur le facteur d'étalement et le débit,
- des moyens pour pour gérer lesdites ressources de traitement, sur la base du modèle de ressources signalé, en fonction du facteur d'étalement et du débit pour les ressources radio allouées.

Un autre objet de la présente invention est un procédé de gestion de ressources de traitement dans un système de radiocommunications mobiles, dans lequel une entité dite première entité gère des ressources radio et des ressources de traitement correspondantes, ces dernières étant prévues dans une entité distincte dite deuxième entité, procédé dans lequel:

- la deuxième entité signale à la première entité un modèle de ressources représentatif de ses capacités de traitement, tel que :

  • si la deuxième entité supporte un modèle de ressources basé sur le facteur d'étalement et le débit, les informations signalées par la deuxième entité, représentatives dudit modèle de ressources, comportent des informations dites premières informations, représentatives d'un modèle de ressources basé sur le facteur d'étalement et représentatif d'une partie desdites capacités de traitement, et des informations dites deuxièmes informations, représentatives d'un modèle de ressources basé sur le débit et représentatif d'une autre partie desdites capacités de traitement,

- si la deuxième entité supporte seulement un modèle de ressources basé sur le facteur d'étalement, les informations signalées par la deuxième entité, représentatives dudit modèle de ressources, comportent seulement des informations représentatives d'un modèle de ressources basé sur le facteur d'étalement,

- la première entité gère lesdites ressources de traitement, sur la base du modèle de ressources signalé, en fonction, selon le cas, du facteur d'étalement et du débit, ou du facteur d'étalement seul, pour les ressources radio allouées.

Suivant une autre caractéristique, si la deuxième entité supporte à la fois un modèle de ressources basé sur le facteur d'étalement et le débit, et un modèle de resources basé sur le débit, elle sélectionne un de ces deux modèles comme étant le plus représentatif de ses capacités de traitement, et signale à la première entité le modèle de ressources sélectionné.

Suivant une autre caractéristique,

- les informations signalées par la deuxième entité, représentatives d'un modèle de ressources, comportent une capacité de traitement globale, ou crédit de capacité, et une loi de consommation, indiquant la quantité de cette capacité de traitement globale nécessaire pour l'allocation de ressources radio, en fonction, selon le cas, du facteur d'étalement et du débit, ou du facteur d'étalement seul,
- ladite gestion de ressources de traitement par ladite deuxième entité comporte une mise à jour du crédit de capacité à chaque allocation de ressources radio, sur la base de ladite loi de consommation, en fonction, selon le cas, du facteur d'étalement et du débit, ou du facteur d'étalement seul, pour les ressources radio allouées.

Suivant une autre caractéristique, lesdites premières informations comportent au moins un coût d'allocation dit premier coût d'allocation, correspondant à la quantité de capacité de traitement globale nécessaire pour l'allocation de ressources radio, pour une valeur de facteur d'étalement, et lesdites deuxièmes informations comportent au moins un coût d'allocation dit deuxième coût d'allocation, correspondant à la quantité de capacité de traitement globale nécessaire pour l'allocation de ressources radio, pour une valeur de débit.

Un autre objet de la présente invention est un système de radiocommunications mobiles, pour la mise en oeuvre d'un tel procédé.

Notamment, suivant une autre caractéristique :

- la deuxième entité comporte des moyens pour signaler à la première entité un modèle de ressources représentatif de ses capacités de traitement, tel que :

  • si la deuxième entité supporte un modèle de ressources basé sur le facteur d'étalement et le débit, les informations signalées par la deuxième entité, représentatives dudit modèle de ressources, comportent des informations dites premières informations, représentatives d'un modèle de ressources basé sur le facteur d'étalement et représentatif d'une partie desdites capacités de traitement, et des informations dites deuxièmes informations, représentatives d'un modèle de ressources basé sur le débit et représentatif d'une autre partie desdites capacités de traitement,
  • si la deuxième entité supporte seulement un modèle de ressources basé sur le facteur d'étalement, les informations signalées par la deuxième entité, représentatives dudit modèle de ressources, comportent seulement des informations représentatives d'un modèle de ressources basé sur le facteur d'étalement,

- la première entité comporte des moyens pour gérer lesdites ressources de traitement, sur la base du modèle de ressources signalé, en fonction, selon le cas, du facteur d'étalement et du débit, ou du facteur d'étalement seul, pour les ressources radio allouées.

Un autre objet de la présente invention est une station de base pour système de radiocommunications mobiles, pour la mise en oeuvre d'un tel procédé.

Notamment, suivant une autre caractéristique, cette station de base comporte :

- des moyens pour signaler à un contrôleur de stations de base un modèle de ressources représentatif de ses capacités de traitement, tel que :

  • si la station de base supporte un modèle de ressources basé sur le facteur d'étalement et le débit, les informations signalées par la deuxième entité, représentatives dudit modèle de ressources, comportent des informations dites premières informations, représentatives d'un modèle de ressources basé sur le facteur d'étalement et représentatif d'une partie desdites capacités de traitement, et des informations dites deuxièmes informations, représentatives d'un modèle de ressources basé sur le débit et représentatif d'une autre partie desdites capacités de traitement,

- si la station de base supporte seulement un modèle de ressources basé sur le facteur d'étalement, les informations signalées par la deuxième entité, représentatives dudit modèle de ressources, comportent seulement des informations représentatives d'un modèle de ressources basé sur le facteur d'étalement.

Un autre objet de la présente invention est un contrôleur de stations de base pour système de radiocommunications mobiles, pour la mise en oeuvre d'un tel procédé.

Notamment, suivant une autre caractéristique, ce contrôleur de stations de base comporte:

- des moyens pour recevoir d'une station de base un modèle de ressources représentatif de ses capacités de traitement, tel que :

  - si la station de base supporte un modèle de ressources basé sur le facteur d'étalement et le débit, les informations signalées par la deuxième entité, représentatives dudit modèle de ressources, comportent des informations dites premières informations, représentatives d'un modèle de ressources basé sur le facteur d'étalement et représentatif d'une partie desdites capacités de traitement, et des informations dites deuxièmes informations, représentatives d'un modèle de ressources basé sur le débit et représentatif d'une autre partie desdites capacités de traitement,
  - si la station de base supporte seulement un modèle de ressources basé sur le facteur d'étalement, les informations signalées par la deuxième entité, représentatives dudit modèle de ressources, comportent seulement des informations représentatives d'un modèle de ressources basé sur le facteur d'étalement,

- des moyens pour pour gérer lesdites ressources de traitement, sur la base du modèle de ressources signalé, en fonction, selon le cas, du facteur d'étalement et du débit, ou du facteur d'étalement seul, pour les ressources radio allouées.

D'autres objets et caractéristiques de la présente invention apparaîtront à la lecture de la description suivante d'exemples de réalisation, faite en relation avec les dessins ci-annexés dans lesquels:

- la figure 1, décrite précédemment, rappelle l'architecture générale d'un système de radiocommunications mobiles, tel que notamment le système UMTS,
- les figures 2 et 3, décrites précédemment, rappellent les principaux traitements utilisés, respectivement en émission et en réception, dans une station de base, telle qu'un Node B pour le système UMTS,
- les figures 4 et 5 sont des schémas destinés à illustrer des exemples de mise en oeuvre de procédés suivant la présente invention.

La présente invention peut aussi être expliquée de la manière suivante.

On rappelle tout d'abord, brièvement, l'état actuel de la norme, correspondant à la version R5 (similaire aux versions R99 et R4).

L'état actuel de la norme est décrit dans la spécification 3GPP TS 25. 433 V5.2.0, principalement dans les sections :

- 9.2.1.9A (« Common Channels Capacity Consumption Law »)
- 9.2.1.20A (« Dedicated Channels Capacity Consumption Law »)

La capacité de traitement d'un Node B peut être signalée au CRNC dans deux messages NBAP (où NBAP, pour « Node B Application Part ») désigne un protocole de signalisation utilisé sur l'interface Iub entre Node B et CRNC):

- un message « Resources Status Indication »
- un message « Audit Response ».

La capacité de traitement du Node B est représentée par :

- un crédit de capacité qui représente les ressources de traitement totales du Node B. Un crédit de capacité peut être spécifié pour chaque direction : « uplink » (ou sens de transmission des stations mobiles vers le réseau), ou « downlink » (ou sens de transmission du réseau vers les stations mobiles),
- une loi de consommation qui indique la quantité estimée de resources de traitement utilisée par le Node B pour un nouveau lien radio (ou RL, pour « radio link » ) ou pour reconfigurer un lien radio existant.

Il y a deux lois de consommation : une pour les canaux communs (ou « common channels » ) et une pour les canaux dédiés (ou « dedicated channels » ). Chaque loi de consommation permet de spécifier le coût d'un lien radio (ou « RL cost ») pour le sens montant (ou « UL cost ») et pour le sens descendant (ou « DL cost ») pour chaque facteur d'étalement possible.

De plus, pour la loi de consommation pour les canaux dédiés, il est aussi possible de spécifier un coût additionnel, montant et descendant, pour chaque nouvel ensemble de liens radio (ou « RLS cost », où RLS est utilisé pour « radio link set » ). Ces coûts additionnels « RLS cost » sont pris en compte en addition aux coûts « RL cost », dans le cas de création de nouveau lien radio (ce qui, dans le cas où seulement un RLS est utilisé par UE, est équivalent au cas d'établissement d'un premier lien radio).

La façon de traiter le cas du canal DSCH (« Downlink Shared CHannel) et le cas de multi-codes est également spécifiée dans la spécification rappelée ci-dessus, et fait également l'objet d'une autre demande de brevet antérieure (demande de brevet français publiée sous le n° 2 821 515) déposée par le demandeur. Pour le cas du canal DSCH, un coût de traitement associé au canal DSCH (égal à « DL RL cost ») ) est pris en compte lorsqu'un canal DSCH est alloué ou effacé ou reconfiguré. Pour le cas du multi-codes, les coûts donnés dans la loi de consommation sont des coûts par code d'étalement (ou « spreading code » ou « channelization code ») et lorsque des codes d'étalement multiples sont utilisés, le coût de traitement est pris comme N fois le coût d'un code, où N est le nombre de codes.

Comme rappelé précédemment, dans la demande de brevet français publiée sous le n° 2 819 658, déposée par le demandeur, un mécanisme de crédit similaire, mais basé sur le débit au lieu du facteur d'étalement, a été proposé. La même signalisation que pour le mécanisme de crédit basé sur le facteur d'étalement peut être utilisée, mais au lieu d'interpréter la loi de consommation comme des coûts par facteur d'étalement, on l'interprète comme des coûts donnés pour différents débits, notamment des débits de référence.

La présente invention ne propose pas, contrairement à cette demande de brevet antérieure, de signaler le mécanisme de crédit sur la base du débit, au lieu de signaler le mécanisme de crédit sur la base du facteur d'étalement, mais de le signaler en addition.

Ceci peut être fait par exemple de deux façons :

- soit en ajoutant, à la loi de consommation existante, basée sur le facteur d'étalement, une nouvelle loi de consommation spécifique basée sur le débit (qui peut elle-même comporter une nouvelle loi de consommation pour les canaux dédiés , et une nouvelle loi de consommation pour les canaux communs),
- soit en ajoutant, aux coûts existants, ou à la loi de consommation existante, basée sur le facteur d'étalement, de nouveaux coûts correspondant à un mécanisme de crédit basé sur le débit (ces coûts ajoutés pouvant eux-mêmes comporter, dans le cas de la loi de consommation pour les canaux dédiés, un coût pour un lien radio (ou « RL cost ») et éventuellement un coût additionnel (ou « RLS cost »)).

Le coût (ou « cost ») pour un nouveau lien radio, ou un lien radio reconfiguré (étant entendu que dans le cas de lien radio reconfiguré ce coût correspond à la différence entre le nouveau coût, après reconfiguration, et l'ancien coût, avant reconfiguration), peut alors être calculé de la manière suivante :

$$Cost = cost1 + cost2$$

où « cost1 » est un coût qui est fonction du facteur d'étalement de ce lien radio, calculé sur la base des lois de consommation basées sur le facteur d'étalement (ou « SF », pour « Spreading Factor ») telles que spécifiées dans la norme actuelle, et « cost2 » est un coût qui est fonction du débit d'information de ce lien radio, comme proposé dans la demande de brevet antérieure publiée sous le n° 2 819 658 rappelée précédemment et dont le contenu est de ce fait considéré comme faisant partie de la présente demande. On rappelle néanmoins dans ce qui suit les principaux enseignements de cette demande antérieure.

Comme rappelé précédemment, selon cette demande antérieure, on conserve la notion de capacité de traitement globale (ou « capacity crédit ») mais le coût d'allocation n'est pas signalé pour chaque valeur possible du facteur d'étalement mais pour différentes valeurs possibles du débit.

En outre, cette demande antérieure a également pour objet de résoudre de nouveaux problèmes se posant avec une telle approche basée sur le débit.

Un premier problème est que, alors que le nombre de facteurs d'étalement possibles est fini (par exemple, dans le système UMTS, 8 valeurs de facteur d'étalement sont possibles: 4, 8, 16, 32, 64, 128, 256, 512), le débit peut prendre n'importe quelle valeur positive. Or on comprend qu'en pratique il n'est pas possible ou réaliste que le Node B signale au CRNC le coût d'allocation pour toutes les valeurs de débit.

Un deuxième problème est que, pour la mise à jour du crédit de capacité à chaque allocation de ressources, en fonction du débit correspondant, le CRNC ne dispose pas, du moins dans l'état actuel de la norme, du débit. Au contraire, dans la solution antérieure rappelée précédemment, le CRNC a connaissance du facteur d'étalement car le facteur d'étalement est signalé par le SRNC au CRNC lorsqu'un nouveau lien radio est ajouté, retranché ou reconfiguré.

Un troisième problème est que le débit peut ne pas être fixe mais varier. Au contraire, le facteur d'étalement, au moins pour le sens descendant, est fixe.

Pour résoudre le premier problème mentionné ci-dessus, il est proposé de signaler le coût pour seulement quelques valeurs typiques de débit appelées par la suite débits de référence, et une solution est en outre proposée pour déterminer le coût pour toute valeur de débit, à partir des coûts signalés pour les débits de référence. Par exemple, une interpolation linéaire peut être utilisée (c'est la solution la plus simple), tout en s'assurant que le coût reste toujours positif (c'est-à-dire si le résultat de l'interpolation est négatif, le coût résultant est égal à zéro).

Par exemple quand le débit $R$ n'est pas un débit de référence, le coût noté *"Consumption_cost"* est calculé en fonction des coûts $C_{\text{inf}}$ et $C_{\text{sup}}$ correspondant aux débits de référence $R_{\text{inf}}$ et $R_{\text{sup}}$ (avec $R_{\text{inf}} < R_{\text{sup}}$) qui sont les plus proches du débit R , selon la relation suivante:

$$Consumption\_cost = C_{\text{inf}} + \frac{R - R_{\text{inf}}}{R_{\text{sup}} - R_{\text{inf}}} (C_{\text{sup}} - C_{\text{inf}} \tag{1}$$

Si le résultat est négatif, le coût d'allocation peut être fixé à zéro, soit :

$$Consumption\_cost = 0.$$

D'autres techniques d'interpolation pourraient bien entendu être utilisées.

Par ailleurs, à titre d'exemple de débits de référence, on peut citer par exemple les valeurs 4.75 kbps, 12.2 kbps, 64 kbps, 128 kbps, 144 kbps, 384 kbps, 2048 kbps.

En outre, pour résoudre les deuxième et troisième problèmes mentionnés ci-dessus, dans un système tel que le système UMTS par exemple, une solution est de dériver le débit en fonction d'un paramètre appelé TFCS (pour « Transport Format Combination Set » en anglais).

On rappelle qu'une caractéristique d'un système tel que l'UMTS est la possibilité de transporter plusieurs services sur une même connexion, c'est-à-dire plusieurs canaux de transport sur un même canal physique. De tels canaux de transport (ou TrCH, pour "Transport Channels" en anglais) sont traités séparément selon un schéma de codage-canal (incluant un codage détecteur d'erreurs, un codage correcteur d'erreurs, une adaptation de débit, et un entrelacement, comme rappelé en relation avec la figure 2) avant d'être multiplexés temporellement pour former un canal de transport composite codé (ou CCTrCH, pour "Coded Composite Transport Channel" en anglais) à transmettre sur un ou plusieurs canaux physiques. Plus d'informations sur ces aspects de l'UMTS peuvent être trouvés dans le document 3G TS25 212 V3.0.0 publié par le 3GPP.

On rappelle également qu'une autre caractéristique d'un système tel que l'UMTS est d'autoriser des débits variables pour les utilisateurs, en cours de communication. Les données transportées par les canaux de transport sont organisées en unités de données appelées blocs de transport (ou « Transport Blocks » en anglais) reçus avec une périodicité appelée intervalle de temps de transmission (ou TTI, pour « Transmission Time Interval » en anglais). Le nombre et la taille des blocs de transport reçus pour un canal de transport donné sont variables en fonction du débit, et on définit la notion de format de transport comme la connaissance du nombre et de la taille de ces blocs de transport (et donc du débit instantané), pour un canal de transport donné. On définit aussi la notion de combinaison de format de transport (ou TFC, pour « Transport Format Combination » en anglais) comme une combinaison de formats de transport autorisée pour différents canaux de transport destinés à être multiplexés selon un même canal de transport composite codé. On définit enfin la notion d'ensemble de combinaisons de format de transport (ou TFCS, pour « Transport Format Combination Set » en anglais) comme l'ensemble de telles combinaisons possibles de formats de transport. Plus d'informations sur ces aspects de l'UMTS peuvent être trouvés dans le document TS 25.302 V.3.7.0 publié par le 3GPP.

Le débit pour chaque TFC à l'intérieur d'un TFCS peut alors être calculé selon la relation suivante:

$$br_j = \sum_{k=1}^{n} \frac{N_k^{(j)} L_k^{(j)}}{TTI_k} \tag{2}$$

où $br_j$ est le débit du $j^{\text{ième}}$ TFC dans le TFCS, $n$ est le nombre de canaux de transport dans le CCTrCh, $N^{(j)}_k$ et $L^{(j)}_k$ sont respectivement le nombre de blocs de transport et la taille des blocs de transport (en nombre de bits) pour le $k^{\text{ième}}$ canal de transport dans le $j^{\text{ième}}$ TFC et $TTI_k$ est l'intervalle de temps de transmission ou TTI (en secondes) du $k^{\text{ième}}$ canal de transport.

D'autres formules pourraient bien entendu être utilisées, suivant la façon de définir le débit pour les données à traiter.

En outre, une difficulté est que le débit n'est pas fixe mais peut varier (c'est-à-dire n'importe quel TFC à l'intérieur du TFCS peut être utilisé pendant la communication) et cette variation n'est pas connue a priori du Node B ou de l'UE, et ne peut pas être connue a priori. La solution la plus simple est de considérer seulement le débit maximum, ou le débit qui maximise le coût d'allocation (ce dernier débit est habituellement égal au débit maximum mais ce n'est pas toujours le cas), parmi tous les TFC à l'intérieur du TFCS. En effet, lorsqu'un nouveau lien radio est accepté, il est nécessaire de vérifier que le Node B a des ressources suffisantes pour traiter jusqu'au débit maximum autorisé pour ce nouveau lien radio.

En notant « *Maximum _ bit _ rate* » le débit défini par la relation :

$$Maximum\_bit\_rate = \underset{j}{\text{Max}}\, br_j \qquad (3)$$

la relation (1) devient alors :

$$Consumption\_cost = C_{\text{inf}} + \frac{Maximum\_bit\_rate - R_{\text{inf}}}{R_{\text{sup}} - R_{\text{inf}}}\, (C_{\text{sup}} - C_{\text{inf}}) \qquad (4)$$

Par ailleurs, ce procédé peut être effectué globalement pour les deux sens de transmission (montant et descendant) ou par sens de transmission (les sens montant et descendant étant traités séparément) : dans ce dernier cas un crédit total est donné pour chaque sens et le coût d'allocation est donné pour chaque débit de référence et pour chaque sens.

Par ailleurs, l'exemple de solution décrit précédemment, consistant à considérer seulement le débit maximum, bien que plus simple, a cependant pour inconvénient que les ressources de traitement ainsi réservées dans le Node B sont probablement sur-estimées, puisqu'à chaque fois des ressources de traitement correspondant au débit maximum sont réservées. Il peut alors arriver que certaines ressources de traitement soient encore disponibles, alors que le crédit est vide. Dans ce cas, une demande de nouveau lien radio ou de canal de transport commun pourrait être rejetée alors que des ressources de traitement suffisantes étaient disponibles dans le Node B.

Une solution pour éviter un tel inconvénient serait que le CRNC ne calcule pas le crédit restant sur la base du débit maximum mais sur la base du débit effectif. Ce débit effectif est connu du TFC en cours tel que rappelé précédemment. Dans ce cas, les mêmes informations seraient toujours signalées par le Node B au CRNC, et seul l'algorithme de mise à jour du crédit restant, implémenté dans le CRNC, changerait : il serait alors nécessaire de mettre à jour ce crédit plus fréquemment (à chaque fois que le TFC change).

Pour les canaux dédiés (DCH), une difficulté pour mettre en oeuvre une telle solution est que le contrôle d'admission d'appel est implémenté dans le CRNC qui n'a pas connaissance (dans l'état actuel de la norme) du TFC instantané (le CRNC a seulement connaissance du TFCS, le TFC étant connu de l'UE, du Node B et du SRNC). Cependant, avec une signalisation appropriée, ou si le contrôle d'admission d'appels était implémenté dans une entité ayant connaissance de cette information, une telle solution pourrait être applicable.

Pour les canaux de transport communs (incluant le DSCH) une telle solution semble applicable dans l'état actuel de la norme (à la fois pour le sens montant et pour le sens descendant) puisque la fonction MAC-c/sh (qui choisit le TFC pour les canaux communs et partagés) est implémentée dans le CRNC.

Par ailleurs, dans le cas où plusieurs canaux de transport sont multiplexés sur un canal physique, et ne nécessitent pas les mêmes ressources de traitement (par exemple l'un utilisant un code convolutionnel et l'autre un turbo-code), pour éviter les inconvénients dus au fait que le coût serait choisi en fonction du débit d'ensemble sans prendre en compte le fait que les deux canaux de transport nécessitent des ressources de traitement différentes, une solution serait de signaler le coût d'allocation par débit et par canal de transport, le coût total pour tous les canaux de transport étant calculé par le CRNC en fonction des types de canaux de transport. Une telle solution permettrait de distinguer différents canaux de transport, permettant ainsi d'avoir différents coûts d'allocation pour des canaux de transport ayant des caractéristiques différentes. Comme décrit précédemment, le coût d'allocation peut être basé sur le débit maximum du canal de transport considéré (donné par le TFCS) ou sur le débit effectif (donné par le TFC courant).

Il serait aussi possible de prévoir un coût en fonction du débit différent pour chaque type de codage correcteur d'erreur (code convolutif ou turbo-code notamment). Dans ce cas, on aurait par exemple deux coûts pour chaque débit de référence, un à utiliser dans le cas de turbo-code, l'autre à utiliser dans le cas contraire.

Comme indiqué précédemment, les mécanismes existants décrits dans la spécification 3GPP TS 25.433 pourront être ré-utilisés dans la mesure où le procédé suivant l'invention utilise un modèle de ressources basé sur le facteur d'étalement.

Certains de ces mécanismes pourront également être ré-utilisés dans la mesure où le procédé suivant l'invention utilise un modèle de ressources basé sur le débit. A titre d'exemple de mécanismes qui pourraient être ré-utilisés, on pourrait citer, notamment le cas du canal DSCH. Alternativement, des mécanismes distincts pourraient être utilisés.

A titre d'exemple de cas où des mécanismes distincts pourraient être préférés, on pourrait citer, notamment :

- le cas de multi-codes : dans ce cas, on pourrait préférer que le coût fonction du débit soit appliqué quel que soit le nombre de codes,
- le cas de création d'un premier lien radio (ou RL) d'un ensemble de liens radio (ou RLS) : dans ce cas, on pourrait préférer ne pas appliquer, ou même ne pas signaler, de coût additionnel (ou RLS cost) pour le cas de coût fonction du débit.

Alternativement, des mécanismes similaires pourraient être utilisés.

Suivant un des différents aspects de la présente invention, on conserve la notion de capacité de traitement globale (ou « capacity crédit »), mais le coût d'allocation n'est plus signalé pour différentes valeurs de facteur d'étalement ou pour différentes valeurs de débit, mais pour différentes valeurs de facteur d'étalement et différentes valeurs de débit. En effet, comme observé par le demandeur, le débit est plus représentatif de la capacité de traitement d'un Node B que le facteur d'étalement, au moins pour certains traitements (tels que notamment les traitements de codage/décodage correcteur d'erreurs), et pour certains autres traitements (tels que notamment les traitements d'étalement/désétalement), le facteur d'étalement peut être conservé comme représentatif de la capacité de traitement d'un Node B.

En d'autres termes encore, suivant un des différents aspects de l'invention, dans un procédé de gestion de ressources de traitement dans un système de radiocommunications mobiles, dans lequel une entité dite première entité (notamment un contrôleur de stations de base ou CRNC dans un système tel que le système UMTS) gère des ressources radio et des ressources de traitement correspondantes, ces dernières étant prévues dans une entité distincte dite deuxième entité (notamment une station de base ou Node B dans un système tel que le système UMTS) :

- la deuxième entité signale à la première entité un modèle de ressources représentatif de ses capacités de traitement, basé sur le facteur d'étalement et le débit,
- la première entité gère lesdites ressources de traitement, sur la base du modèle de ressources signalé, en fonction du facteur d'étalement et du débit pour les ressources radio allouées.

Avantageusement :

- les informations signalées par la deuxième entité, représentatives dudit modèle de ressources, comportent une capacité de traitement globale, ou crédit de capacité, et une loi de consommation, indiquant la quantité de cette capacité de traitement globale nécessaire pour l'allocation de ressources radio, en fonction du facteur d'étalement et du débit,
- ladite gestion de ressources de traitement par ladite deuxième entité comporte une mise à jour du crédit de capacité à chaque allocation de ressources radio, sur la base de ladite loi de consommation, en fonction du facteur d'étalement et du débit pour les ressources radio allouées.

Avantageusement, les informations signalées par la deuxième entité, représentatives dudit modèle de ressources basé sur le facteur d'étalement et le débit, comportent des informations dites premières informations, représentatives d'un modèle de ressources basé sur le facteur d'étalement, représentatif d'une partie desdites capacités de traitement, et des informations dites deuxièmes informations, représentatives d'un modèle de ressources basé sur le débit, représentatif d'une autre partie desdites capacités de traitement.

Avantageusement, lesdites premières informations comportent au moins un coût d'allocation dit premier coût d'allocation, correspondant à la quantité de capacité de traitement globale nécessaire pour l'allocation de ressources radio, pour une valeur de facteur d'étalement, et lesdites deuxièmes informations comportent au moins un coût d'allocation dit deuxième coût d'allocation, correspondant à la quantité de capacité de traitement globale nécessaire pour l'allocation de ressources radio, pour une valeur de débit.

Le terme « allocation de ressources radio » est destiné à englober toutes les opérations suceptibles de modifier l'allocation des ressources radio à l'intérieur de ce système, ces opérations incluant non seulement les opérations d'allocation proprement dites, mais aussi de désallocation ou de reconfiguration.

Ainsi, dans le système UMTS, ces différentes opérations correspondent:

- pour les canaux de transport dédiés, aux procédures d'établissement, addition, effacement, ou reconfiguration, d'un lien radio (ou en anglais, « radio link set-up », « radio link addition », « radio link deletion », « radio link reconfiguration ») telles que définies dans le document 3G TS 25.433 publié par le 3GPP),
- pour les canaux de transport communs, lors des procédures d'établissement, effacement, ou reconfiguration, d'un canal commun (ou en anglais, « common transport channel set-up », « common transport channel deletion », « common transport channel reconfiguration ») telles que définies dans le document 3G TS 25.433 publié par le 3GPP).

Le terme de « mise à jour » du crédit de capacité est destiné à recouvrir aussi bien des opérations par lesquelles ce crédit de capacité est débité, dans le cas où de nouvelles ressources radio sont requises, que des opérations par lesquelles ce crédit de capacité est crédité, dans le cas où de nouvelles ressources radio ne sont plus nécessaires et sont donc restituées.

Ainsi :

- pour les procédures de « radio link set-up », « radio link addition », et « common transport channel set-up », le crédit de capacité est débité,
- pour les procédures de «radio link deletion », et de « common transport channel deletion », le crédit de capacité est crédité,
- pour le cas de « radio link reconfiguration » et de « common transport channel reconfiguration » le crédit de capacité est débité ou crédité de la différence entre le nouveau coût (après reconfiguration) et l'ancien coût (avant reconfiguration) selon que cette différence est positive ou négative.

En outre, pour couvrir toutes les possibilités pour définir le débit dans ces systèmes, le débit peut être un débit-bit, un débit-symbole, ou un débit-chip. De préférence, le débit considéré est un débit net.

La distinction entre débit-bit et débit-symbole est habituellement faite dans les systèmes utilisant plusieurs modulations possibles. La modulation est le traitement permettant d'obtenir, à partir d'informations à transmettre, un signal analogique porteur de ces informations. Différentes techniques de modulation sont connues, caractérisées par leur efficacité spectrale, c'est-à-dire leur capacité à transmettre un nombre plus ou moins élevé de bits par symbole, le débit de bits transmis augmentant avec l'efficacité de la modulation, pour une même bande de fréquence allouée.

Le terme débit-chip est utilisé pour désigner le débit après étalement (le terme "chip" désignant classiquement la période de transmission élémentaire du signal obtenu après étalement).

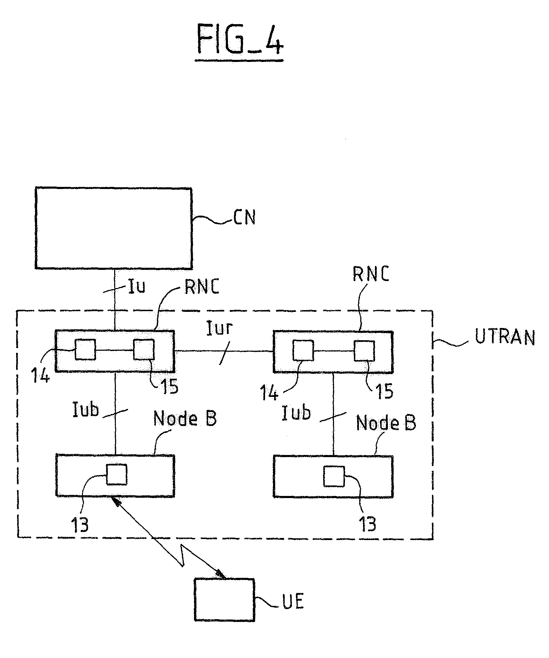

La figure 4 est un schéma destiné à illustrer un exemple de moyens à prévoir suivant l'invention dans une station de base (ou Node B dans un système tel que le système UMTS), et dans un contrôleur de stations de base (ou RNC pour un système tel que le système UMTS), pour mettre en oeuvre un tel procédé.

Une station de base notée Node B comporte ainsi (en plus d'autres moyens qui peuvent être des moyens classiques):

- des moyens notés 13 pour signaler à un contrôleur de stations de base un modèle de ressources représentatif de ses capacités de traitement, basé sur le facteur d'étalement et le débit,

Un contrôleur de stations de base noté RNC comporte ainsi (en plus d'autres moyens qui peuvent être des moyens classiques):

- des moyens notés 14 pour recevoir d'une station de base un modèle de ressources basé sur le facteur d'étalement et le débit
- des moyens notés 15 pour gérer lesdites ressources de traitement, sur la base du modèle de ressources signalé, en fonction du facteur d'étalement et du débit pour les ressources radio allouées.

Ces différents moyens peuvent opérer suivant le procédé décrit précédemment; leur réalisation particulière ne présentant pas de difficulté particulière pour l'homme du métier, de tels moyens ne nécessitent pas d'être décrits ici de manière plus détaillée que par leur fonction.

Par ailleurs, d'autres aspects de la présente invention peuvent aussi être expliqués de la manière suivante.

Pour résoudre le problème de compatibilité avec les équipements anciens, les nouvelles lois de consommation ou les nouveaux coûts (suivant les notations utilisées précédemment) peuvent être prévus de manière optionnelle ;

dans ce cas seules les lois existantes ou les coûts existants (suivant les notations utilisées précédemment) pourraient être pris en compte par le CRNC.

Le problème de compatibilité pourrait alors être résolu par exemple de la manière suivante.

Dans ce qui suit, le modèle de ressources suivant l'invention, basé sur le facteur d'étalement et le débit, sera aussi appelé nouveau modèle de ressources, et le modèle de ressources basé sur le facteur d'étalement, tel que spécifié dans l'état actuel de la norme, sera aussi appelé modèle de ressources existant.

Dans ce qui suit, l'expression « nouveau CRNC » (ou « nouveau Node B ») désigne un CRNC (ou un Node B) supportant au moins le nouveau modèle de ressources, et l'expression « ancien CRNC » (ou « ancien Node B ») désigne un CRNC (ou un Node B) supportant seulement le modèle de ressources existant.

Dans ce qui suit, on considèrera en outre, à titre d'exemple, le cas où un nouveau Node B supportant le nouveau modèle de ressources et le modèle de ressources existant sélectionne un de ces modèles de ressources comme étant le plus représentatif de ses capacités de traitement, et signale au CRNC le modèle de ressources ainsi sélectionné.

Dans ce qui suit, on considérera en outre, à titre d'exemple, le cas de nouveaux coûts, plutôt que de nouvelle loi (suivant les notations utilisées précédemment ).

On peut alors par exemple distinguer les cas suivants :

- Nouveau CRNC + nouveau Node B :

Dans ce cas le Node B signale, soit seulement les coûts existants (basés sur le facteur d'étalement), soit à la fois les coûts existants (basés sur le facteur d'étalement) et les nouveaux coûts (basés sur le débit) et le CRNC prend en compte les coûts ainsi signalés pour estimer les ressources de traitement restantes dans le Node B.

- Ancien CRNC + Ancien Node B :

Dans ce cas le Node B signale seulement les coûts existants (basés sur le facteur d'étalement) et le CRNC prend en compte les coûts ainsi signalés pour estimer les ressources de traitement restantes dans le Node B.

- Nouveau CRNC + Ancien Node B :

Dans ce cas le Node B signale seulement les coûts existants (basés sur le facteur d'étalement) , et le CRNC prend en compte les coûts ainsi signalés pour estimer les ressources de traitement restantes dans le Node B.

- Ancien CRNC + Nouveau Node B :

Dans ce cas le Node B signale, soit seulement les coûts existants (basés sur le facteur d'étalement), soit à la fois les coûts existants (basés sur le facteur d'étalement) et les nouveaux coûts (basés sur le débit). Seuls les coûts existants (basés sur le facteur d'étalement) sont considérés par le CRNC pour estimer les ressources de traitement restantes dans le Node B. Dans ce cas, le problème de compatibilité n'est pas résolu, si le Node B a signalé à la fois les coûts existants (basés sur le facteur d'étalement) et les nouveaux coûts (basés sur le débit), puisque l'interprétation du modèle de ressources est alors différente dans le Node B et dans le CRNC. Cependant ce cas est très improbable, car dans le cas de mise à jour (ou « upgrading » en anglais) des équipements de réseau, les RNC sont généralement mis à jour avant les Node B (cette mise à jour étant en effet plus facile pour les RNC, puisqu'il y a beaucoup moins de RNC que de Node B). Cependant une solution pour résoudre ce problème serait de permettre au CRNC de signaler au Node B les mécanismes supportés, notamment via le protocole de signalisation NBAP (« Node B Application Part »), par exemple dans le message « cell setup request », de telle sorte qu'un nouveau Node B n'utilise pas le nouveau mécanisme de crédit avec un ancien CRNC.

En d'autres termes, suivant un autre aspect de l'invention, dans un procédé de gestion de ressources de traitement dans un système de radiocommunications mobiles, dans lequel une entité dite première entité (notamment un contrôleur de stations de base ou CRNC dans un système tel que le système UMTS) gère des ressources radio et des ressources de traitement correspondantes, ces dernières étant prévues dans une entité distincte dite deuxième entité (notamment une station de base ou Node B dans un système tel que le système UMTS) :

**-** la deuxième entité signale à la première entité un modèle de ressources représentatif de ses capacités de traitement, tel que :

• si la deuxième entité supporte un modèle de ressources basé sur le facteur d'étalement et le débit, les informations signalées par la deuxième entité, représentatives dudit modèle de ressources, comportent des informations dites premières informations, représentatives d'un modèle de ressources basé sur le facteur d'étalement et représentatif d'une partie desdites capacités de traitement, et des informations dites deuxièmes informations, représentatives d'un modèle de ressources basé sur le débit et représentatif d'une autre partie desdites capacités de traitement,

- • si la deuxième entité supporte seulement un modèle de ressources basé sur le facteur d'étalement, les informations signalées par la deuxième entité, représentatives dudit modèle de ressources, comportent seulement des informations représentatives d'un modèle de ressources basé sur le facteur d'étalement,

- la première entité gère lesdites ressources de traitement, sur la base du modèle de ressources signalé, en fonction, selon le cas, du facteur d'étalement et du débit, ou du facteur d'étalement seul, pour les ressources radio allouées.

Avantageusement, si la deuxième entité supporte à la fois un modèle de ressources basé sur le facteur d'étalement et le débit, et un modèle de resources basé sur le débit, elle sélectionne un de ces deux modèles comme étant le plus représentatif de ses capacités de traitement, et signale à la première entité le modèle de ressources sélectionné.

Avantageusement :

- les informations signalées par la deuxième entité, représentatives d'un modèle de ressources, comportent une capacité de traitement globale, ou crédit de capacité, et une loi de consommation, indiquant la quantité de cette capacité de traitement globale nécessaire pour l'allocation de ressources radio, en fonction, selon le cas, du facteur d'étalement et du débit, ou du facteur d'étalement seul,
- ladite gestion de ressources de traitement par ladite deuxième entité comporte une mise à jour du crédit de capacité à chaque allocation de ressources radio, sur la base de ladite loi de consommation, en fonction, selon le cas, du facteur d'étalement et du débit, ou du facteur d'étalement seul, pour les ressources radio allouées.

Avantageusement, lesdites premières informations comportent au moins un coût d'allocation dit premier coût d'allocation, correspondant à la quantité de capacité de traitement globale nécessaire pour l'allocation de ressources radio, pour une valeur de facteur d'étalement, et lesdites deuxièmes informations comportent au moins un coût d'allocation dit deuxième coût d'allocation, correspondant à la quantité de capacité de traitement globale nécessaire pour l'allocation de ressources radio, pour une valeur de débit.

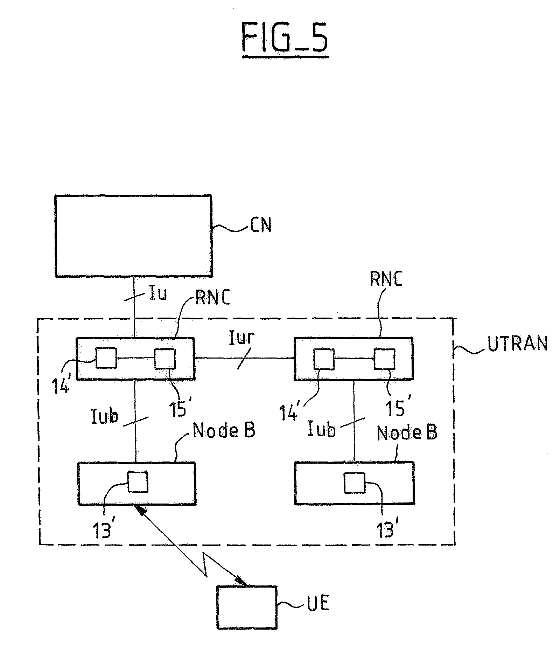

La figure 5 est un schéma destiné à illustrer un exemple de moyens à prévoir suivant l'invention dans une station de base (ou Node B dans un système tel que le système UMTS), et dans un contrôleur de stations de base (ou RNC pour un système tel que le système UMTS), pour mettre en oeuvre un tel procédé.

Une station de base notée Node B comporte ainsi (en plus d'autres moyens qui peuvent être des moyens classiques):

- des moyens notés 13' pour signaler à un contrôleur de stations de base un modèle de ressources représentatif de ses capacités de traitement, tel que :

- • si la deuxième entité supporte un modèle de ressources basé sur le facteur d'étalement et le débit, les informations signalées par la deuxième entité, représentatives dudit modèle de ressources, comportent des informations dites premières informations, représentatives d'un modèle de ressources basé sur le facteur d'étalement et représentatif d'une partie desdites capacités de traitement, et des informations dites deuxièmes informations, représentatives d'un modèle de ressources basé sur le débit et représentatif d'une autre partie desdites capacités de traitement,
- • si la deuxième entité supporte seulement un modèle de ressources basé sur le facteur d'étalement, les informations signalées par la deuxième entité, représentatives dudit modèle de ressources, comportent seulement des informations représentatives d'un modèle de ressources basé sur le facteur d'étalement,

Un contrôleur de stations de base noté RNC comporte ainsi (en plus d'autres moyens qui peuvent être des moyens classiques):

- des moyens notés 14' pour recevoir d'une station de base un modèle de ressources un modèle de ressources représentatif de ses capacités de traitement, tel que :

- • si la deuxième entité supporte un modèle de ressources basé sur le facteur d'étalement et le débit, les informations signalées par la deuxième entité, représentatives dudit modèle de ressources, comportent des informations dites premières informations, représentatives d'un modèle de ressources basé sur le facteur d'étalement et représentatif d'une partie desdites capacités de traitement, et des informations dites deuxièmes informations, représentatives d'un modèle de ressources basé sur le débit et représentatif d'une autre partie desdites capacités de traitement,

- • si la deuxième entité supporte seulement un modèle de ressources basé sur le facteur d'étalement, les informations signalées par la deuxième entité, représentatives dudit modèle de ressources, comportent seulement des informations représentatives d'un modèle de ressources basé sur le facteur d'étalement,

- des moyens notés 15' pour gérer lesdites ressources de traitement , sur la base du modèle de ressources signalé, en fonction, selon le cas, du facteur d'étalement et du débit, ou du facteur d'étalement, pour les ressources radio allouées.

Ces différents moyens peuvent opérer suivant le procédé décrit précédemment; leur réalisation particulière ne présentant pas de difficulté particulière pour l'homme du métier, de tels moyens ne nécessitent pas d'être décrits ici de manière plus détaillée que par leur fonction.

## Revendications

1. Procédé de gestion de ressources de traitement dans un système de radiocommunications mobiles, dans lequel une entité dite première entité gère des ressources radio et des ressources de traitement correspondantes, ces dernières étant prévues dans une entité distincte dite deuxième entité, procédé dans lequel:

- la deuxième entité signale à la première entité un modèle de ressources représentatif de ses capacités de traitement, basé sur le facteur d'étalement et le débit,
- la première entité gère lesdites ressources de traitement, sur la base du modèle de ressources signalé, en fonction du facteur d'étalement et du débit pour les ressources radio allouées.

2. Procédé selon la revendication 1, dans lequel :

- les informations signalées par la deuxième entité, représentatives dudit modèle de ressources, comportent une capacité de traitement globale, ou crédit de capacité, et une loi de consommation, indiquant la quantité de cette capacité de traitement globale nécessaire pour l'allocation de ressources radio, en fonction du facteur d'étalement et du débit,
- ladite gestion de ressources de traitement par ladite deuxième entité comporte une mise à jour du crédit de capacité à chaque allocation de ressources radio, sur la base de ladite loi de consommation, en fonction du facteur d'étalement et du débit pour les ressources radio allouées.

3. Procédé selon l'une des revendications 1 ou 2, dans lequel les informations signalées par la deuxième entité, représentatives dudit modèle de ressources basé sur le facteur d'étalement et le débit, comportent des informations dites premières informations, représentatives d'un modèle de ressources basé sur le facteur d'étalement et représentatif d'une partie desdites capacités de traitement, et des informations dites deuxièmes informations, représentatives d'un modèle de ressources basé sur le débit et représentatif d'une autre partie desdites capacités de traitement.

4. Procédé selon l'une des revendications 2 ou 3, dans lequel lesdites premières informations comportent au moins un coût d'allocation dit premier coût d'allocation, correspondant à la quantité de capacité de traitement globale nécessaire pour l'allocation de ressources radio, pour une valeur de facteur d'étalement, et lesdites deuxièmes informations comportent au moins un coût d'allocation dit deuxième coût d'allocation, correspondant à la quantité de capacité de traitement globale nécessaire pour l'allocation de ressources radio, pour une valeur de débit.

5. Procédé selon la revendication 4, il est prévu différents coûts d'allocation pour différentes valeurs de débit prédéterminées appelées débits de référence.

6. Procédé selon la revendication 5, dans lequel le coût d'allocation pour un débit donné est obtenu à partir du coût d'allocation pour des débits de référence.

7. Procédé selon la revendication 6, dans lequel le coût d'allocation pour un débit donné est obtenu par interpolation à partir du coût d'allocation pour des débits de référence.

**8.** Procédé selon la revendication 7, dans lequel, lorsque le débit $R$ n'est pas un débit de référence, le coût d'allocation "*Consumption_*cost" est calculé en fonction des coûts d'allocation $C_{inf}$ et $C_{sup}$ correspondant aux débits de référence $R_{inf}$ et $R_{sup}$ (avec $R_{inf} < R_{sup}$) qui sont les plus proches du débit $R$, selon la relation suivante:

$$Consumption\_cost = C_{inf} + \frac{R - R_{inf}}{R_{sup} - R_{inf}} (C_{sup} - C_{inf})$$

**9.** Procédé selon l'une des revendications 6 ou 7, dans lequel, si le résultat de l'interpolation est négatif, le coût d'allocation est fixé égal à zéro.

**10.** Procédé selon l'une des revendications 5 à 9, dans lequel ledit débit correspond à un débit maximum.

**11.** Procédé selon la revendication 10, dans lequel ledit débit maximum est obtenu suivant l'expression :

$$Maximum\_bit\_rate = \underset{j}{\mathrm{Max}}\, br_j$$

avec :

$$br_j = \sum_{k=1}^{n} \frac{N_k^{(j)} L_k^{(j)}}{TTI_k}$$

où $br_j$ est le débit du $j^{\text{ième}}$ TFC, ou $j^{\text{ième}}$ combinaison de formats de transport, dans un TFCS, ou ensemble de combinaisons de formats de transport, $n$ est le nombre de canaux de transport multiplexés dans un même canal de transport composite codé, $N_k^{(j)}$ et $L_k^{(j)}$ sont respectivement le nombre de blocs de transport et la taille des blocs de transport (en nombre de bits) pour le $k^{\text{ième}}$ canal de transport dans le $j^{\text{ième}}$ TFC et $TTI_k$ est l'intervalle de temps de transmission ou TTI (en secondes) du $k^{\text{ième}}$ canal de transport.

**12.** Procédé selon l'une des revendications 5 à 11, dans lequel ledit débit correspond à un débit effectif.

**13.** Système de radiocommunications mobiles, comportant des moyens pour mettre en oeuvre un procédé selon l'une des revendications 1 à 12.

**14.** Système de radiocommunications mobiles selon la revendication 13, comportant :

- dans la deuxième entité, des moyens pour signaler à la première entité un modèle de ressources basé sur le facteur d'étalement et le débit,
- dans la première entité, des moyens pour gérer lesdites ressources de traitement, sur la base du modèle de ressources signalé, en fonction du facteur d'étalement et du débit pour les ressources radio allouées.

**15.** Station de base pour système de radiocommunications mobiles, comportant des moyens pour mettre en oeuvre un procédé selon l'une des revendications 1 à 12.

**16.** Station de base selon la revendication 15, comportant :

- des moyens pour signaler à un contrôleur de stations de base un modèle de ressources basé sur le facteur d'étalement et le débit.

**17.** Contrôleur de stations de base pour système de radiocommunications mobiles, comportant des moyens pour mettre en oeuvre un procédé selon l'une des revendications 1 à 12.

**18.** Contrôleur de stations de base selon la revendication 17, comportant:

- des moyens pour recevoir d'une station de base un modèle de ressources basé sur le facteur d'étalement et le débit,
- des moyens pour pour gérer lesdites ressources de traitement, sur la base du modèle de ressources signalé, en fonction du facteur d'étalement et du débit pour les ressources radio allouées.

**19.** Procédé de gestion de ressources de traitement dans un système de radiocommunications mobiles, dans lequel une entité dite première entité gère des ressources radio et des ressources de traitement correspondantes, ces dernières étant prévues dans une entité distincte dite deuxième entité, procédé dans lequel:

- la deuxième entité signale à la première entité un modèle de ressources représentatif de ses capacités de traitement, tel que :

  - si la deuxième entité supporte un modèle de ressources basé sur le facteur d'étalement et le débit, les informations signalées par la deuxième entité, représentatives dudit modèle de ressources, comportent des informations dites premières informations, représentatives d'un modèle de ressources basé sur le facteur d'étalement et représentatif d'une partie desdites capacités de traitement, et des informations dites deuxièmes informations, représentatives d'un modèle de ressources basé sur le débit et représentatif d'une autre partie desdites capacités de traitement,
  - si la deuxième entité supporte seulement un modèle de ressources basé sur le facteur d'étalement, les informations signalées par la deuxième entité, représentatives dudit modèle de ressources, comportent seulement des informations représentatives d'un modèle de ressources basé sur le facteur d'étalement,

- la première entité gère lesdites ressources de traitement, sur la base du modèle de ressources signalé, en fonction, selon le cas, du facteur d'étalement et du débit, ou du facteur d'étalement seul, pour les ressources radio allouées.

**20.** Procédé selon la revendication 19, dans lequel, si la deuxième entité supporte à la fois un modèle de ressources basé sur le facteur d'étalement et le débit, et un modèle de resources basé sur le débit, elle sélectionne un de ces deux modèles comme étant le plus représentatif de ses capacités de traitement, et signale à la première entité le modèle de ressources sélectionné.

**21.** Procédé selon l'une des revendications 19 ou 20, dans lequel :

- les informations signalées par la deuxième entité, représentatives d'un modèle de ressources, comportent une capacité de traitement globale, ou crédit de capacité, et une loi de consommation, indiquant la quantité de cette capacité de traitement globale nécessaire pour l'allocation de ressources radio, en fonction, selon le cas, du facteur d'étalement et du débit, ou du facteur d'étalement seul,
- ladite gestion de ressources de traitement par ladite deuxième entité comporte une mise à jour du crédit de capacité à chaque allocation de ressources radio, sur la base de ladite loi de consommation, en fonction, selon le cas, du facteur d'étalement et du débit, ou du facteur d'étalement seul, pour les ressources radio allouées.

**22.** Procédé selon l'une des revendications 19 à 21, dans lequel lesdites premières informations comportent au moins un coût d'allocation dit premier coût d'allocation, correspondant à la quantité de capacité de traitement globale nécessaire pour l'allocation de ressources radio, pour une valeur de facteur d'étalement, et lesdites deuxièmes informations comportent au moins un coût d'allocation dit deuxième coût d'allocation, correspondant à la quantité de capacité de traitement globale nécessaire pour l'allocation de ressources radio, pour une valeur de débit.

**23.** Système de radiocommunications mobiles, comportant des moyens pour pour mettre en oeuvre un procédé selon l'une des revendications 19 à 22.

**24.** Système de radiocommunications mobiles selon la revendication 23, dans lequel :

- la deuxième entité comporte des moyens pour signaler à la première entité un modèle de ressources représentatif de ses capacités de traitement, tel que :

  - si la deuxième entité supporte un modèle de ressources basé sur le facteur d'étalement et le débit, les informations signalées par la deuxième entité, représentatives dudit modèle de ressources, comportent des informations dites premières informations, représentatives d'un modèle de ressources basé sur le facteur d'étalement et représentatif d'une partie desdites capacités de traitement, et des informations dites deuxièmes informations, représentatives d'un modèle de ressources basé sur le débit et représentatif d'une autre partie desdites capacités de traitement,

• si la deuxième entité supporte seulement un modèle de ressources basé sur le facteur d'étalement, les informations signalées par la deuxième entité, représentatives dudit modèle de ressources, comportent seulement des informations représentatives d'un modèle de ressources basé sur le facteur d'étalement,

- la première entité comporte des moyens pour gérer lesdites ressources de traitement, sur la base du modèle de ressources signalé, en fonction, selon le cas, du facteur d'étalement et du débit, ou du facteur d'étalement seul, pour les ressources radio allouées.

25. Station de base pour système de radiocommunications mobiles, comportant des moyens pour mettre en oeuvre un procédé selon l'une des revendications 19 à 22.

26. Station de base selon la revendication 25, comportant :

- des moyens pour signaler à un contrôleur de stations de base un modèle de ressources représentatif de ses capacités de traitement, tel que :

• si la station de base supporte un modèle de ressources basé sur le facteur d'étalement et le débit, les informations signalées par la deuxième entité, représentatives dudit modèle de ressources, comportent des informations dites premières informations, représentatives d'un modèle de ressources basé sur le facteur d'étalement et représentatif d'une partie desdites capacités de traitement, et des informations dites deuxièmes informations, représentatives d'un modèle de ressources basé sur le débit et représentatif d'une autre partie desdites capacités de traitement,

• si la station de base supporte seulement un modèle de ressources basé sur le facteur d'étalement, les informations signalées par la deuxième entité, représentatives dudit modèle de ressources, comportent seulement des informations représentatives d'un modèle de ressources basé sur le facteur d'étalement.

27. Contrôleur de stations de base pour système de radiocommunications mobiles, comportant des moyens pour mettre en oeuvre un procédé selon l'une des revendications 19 à 22.

28. Contrôleur de stations de base selon la revendication 27, comportant:

- des moyens pour recevoir d'une station de base un modèle de ressources représentatif de ses capacités de traitement, tel que :

• si la station de base supporte un modèle de ressources basé sur le facteur d'étalement et le débit, les informations signalées par la deuxième entité, représentatives dudit modèle de ressources, comportent des informations dites premières informations, représentatives d'un modèle de ressources basé sur le facteur d'étalement et représentatif d'une partie desdites capacités de traitement, et des informations dites deuxièmes informations, représentatives d'un modèle de ressources basé sur le débit et représentatif d'une autre partie desdites capacités de traitement,

• si la station de base supporte seulement un modèle de ressources basé sur le facteur d'étalement, les informations signalées par la deuxième entité, représentatives dudit modèle de ressources, comportent seulement des informations représentatives d'un modèle de ressources basé sur le facteur d'étalement,

- des moyens pour pour gérer lesdites ressources de traitement, sur la base du modèle de ressources signalé, en fonction, selon le cas, du facteur d'étalement et du débit, ou du facteur d'étalement seul, pour les ressources radio allouées.

# FIG_1

CN

Iu

UTRAN

RNC — Iur — RNC

Iub    Iub

NodeB    NodeB

UE

FIG_2

FIG_3

# FIG_4

# FIG_5

**Office européen des brevets**

## RAPPORT DE RECHERCHE EUROPEENNE

Numéro de la demande

EP 04 29 2477

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | FR 2 821 515 A (CIT ALCATEL) 30 août 2002 (2002-08-30) * page 1, ligne 3 - ligne 5 * | 1-4, 13-18 | H04Q7/38 |
| Y | | 5-12, 19-28 | |
| | * page 2, ligne 19 - ligne 25 * * page 3, ligne 30 - ligne 33 * * page 7, ligne 25 - page 9, ligne 8 * * page 13, ligne 18 - ligne 32 * * page 18, ligne 8 - ligne 12 * ----- | | |
| Y,D | FR 2 826 808 A (EVOLIUM SAS) 3 janvier 2003 (2003-01-03) * page 3, ligne 30 - page 4, ligne 6 * * page 8, ligne 9 - page 11, ligne 20 * * page 14, ligne 30 - page 19, ligne 3 * ----- | 5-12, 19-28 | |
| A,D | EUROPEAN TELECOMMUNICATIONS STANDARDS INSTITUTE: "Technical Specification;Universal Mobile Telecommunications System (UMTS); UTRAN lub Interface NBAP Signalling (3G TS 25.433 version 3.2.0 Release 1999)" ETSI TS 125 433 V3.2.0, XX, XX, juin 2000 (2000-06), XP002166441 sections 8.2.7.1 et 8.2.7.2 sections 8.2.15.1 et 8.2.15.2 ----- | 1-28 | **DOMAINES TECHNIQUES RECHERCHES (Int.Cl.7)** H04Q |

Le présent rapport a été établi pour toutes les revendications

| Lieu de la recherche | Date d'achèvement de la recherche | Examinateur |
|---|---|---|
| Munich | 24 février 2005 | Zembery, P |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 29 2477

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-02-2005

| Document brevet cité au rapport de recherche | | Date de publication | Membre(s) de la famille de brevet(s) | | Date de publication |
|---|---|---|---|---|---|
| FR 2821515 | A | 30-08-2002 | FR | 2821515 A1 | 30-08-2002 |
| | | | CN | 1372392 A | 02-10-2002 |
| | | | CN | 1374811 A | 16-10-2002 |
| | | | EP | 1223783 A1 | 17-07-2002 |
| | | | EP | 1235458 A1 | 28-08-2002 |
| | | | EP | 1235459 A1 | 28-08-2002 |
| | | | WO | 02056629 A1 | 18-07-2002 |
| | | | JP | 2002315062 A | 25-10-2002 |
| | | | JP | 2002271297 A | 20-09-2002 |
| | | | JP | 2004523159 T | 29-07-2004 |
| | | | US | 2002119784 A1 | 29-08-2002 |
| | | | US | 2002119785 A1 | 29-08-2002 |
| FR 2826808 | A | 03-01-2003 | FR | 2826808 A1 | 03-01-2003 |
| | | | CN | 1406010 A | 26-03-2003 |
| | | | EP | 1271980 A1 | 02-01-2003 |
| | | | JP | 2003060619 A | 28-02-2003 |
| | | | US | 2003008658 A1 | 09-01-2003 |

EPO FORM P0460

Pour tout renseignement concernant cette annexe : voir Journal Officiel de l'Office européen des brevets, No.12/82